# EUROPÄISCHE PATENTSCHRIFT

(11) **EP 1 651 492 B1**
(45) Veröffentlichungstag und Bekanntmachung des Hinweises auf die Patenterteilung: **05.03.2008**
(21) Anmeldenummer: 04740910.7
(22) Anmeldetag: 12.07.2004
(51) Int. Cl.: B60T 17/02, B60G 17/00

(54) **ELEKTRONISCHE DRUCKLUFTANLAGE**
ELECTRONIC COMPRESSED AIR SYSTEM
DISPOSITIF ELECTRONIQUE A AIR COMPRIME

(30) Priorität: 28.07.2003 DE 10334320; 10.12.2003 DE 10357762
(43) Veröffentlichungstag der Anmeldung: 03.05.2006
(73) Patentinhaber: WABCO GmbH, 30453 Hannover (DE)
(72) Erfinder: DETLEFS, Carsten, 30952 Ronnenberg (DE); DIEKMEYER, Heinrich, 30890 Barsinghausen (DE); LIPPELT, Frank-Dietmar, 30890 Barsinghausen (DE); REINHARDT, Joachim, 30455 Hannover (DE); STRILKA, Bernd, 30459 Hannover (DE)
(74) Vertreter: Günther, Constantin
(86) Internationale Anmeldenummer: PCT/EP2004/007650
(87) Internationale Veröffentlichungsnummer: WO 2005/014359

(56) Entgegenhaltungen:
- WO-A-98/47751
- DE-A- 2 950 904
- DE-A- 10 004 091
- DE-A- 19 515 895

## Beschreibung

Die Erfindung betrifft eine elektronische Druckluftanlage für Fahrzeuge gemäß Oberbegriff des Anspruchs 1.

Durch die WO 98/47751 A1 ist ein pneumatisches Fahrzeug-Bremssystem bekannt, das einen Kompressor, wenigstens einen Luftverbraucherkreis, beispielsweise Betriebsbremskreise, einen Parkbremskreis, einen Niederdruck-Hilfskreis und einen Hochdruckkreis aufweist, wobei die Kreise Druckluftbehälter und Bedarfsventile aufweisen. Zwischen dem Kompressor und dem wenigstens einen Verbraucherkreis befinden sich erste, im stromlosen Grundzustand geschlossene, elektrisch betätigbare Ventile und zwischen dem Kompressor und dem Hilfskreis ein zweites im stromlosen Grundzustand offenes, elektrisch betätigbares Ventil. Die Ventile werden von einer elektronischen Steuereinheit betätigt. Die Ausgangsanschlüsse der ersten Ventile der Luftverbraucherkreise sind über Rückschlagventile mit dem Ausgangsanschluss des zweiten im stromlosen Grundzustand offenen Ventils verbunden. Sollte Druckluftbedarf in einem der Verbraucherkreise bestehen, beispielsweise bedingt durch zu niedrigen Behälterdruck, wird das entsprechende Ventil durch die Steuereinheit aufgesteuert, wodurch der Luftbedarf vom Kompressor gedeckt wird, wobei gleichzeitig das zweite Ven-til für den Hilfskreis geschlossen wird. Ein Ausfall des Kompressors führt zu einem Druckabfall, der von der Steuereinheit erkannt wird, die die Ventile schließt bzw. geschlossen hält, wodurch der Druck in den Kreisen gehalten wird. Ein Druckregelventil bestimmt die Druckhöhe. Bei Ausfall des Druckregelventils wird Überdruck durch ein Überdruckventil abgelassen. Drucksensoren überwachen die Kreise. Über das zweite normalerweise offene Ventil und über den Kreisen vorgeschaltete Rückschlagventile werden die Kreise mit Luft versorgt. Fällt das elektrische System aus, schalten alle Ventile in den Grundzustand. Der Kompressor läuft trotzdem und versorgt die Kreise über das zweite normalerweise offene Ventil des Hilfskreises mit Luft, wobei der Systemdruck durch ein Niederdruckablassventil des Hilfskreises bestimmt wird. Fällt ein Ventil aus, kann der zugeordnete Kreis über das Ventil des Hilfskreises und das Rückschlagventil mit Luft versorgt werden. Das bekannte System ist aufwendig, da jeder Verbraucherkreis mit einem Druckluftbehälter ausgestattet ist.

Durch die DE 100 04 091 C2 ist eine Druckluftversorgungseinrichtung für Fahrzeug-Druckluftanlagen mit einem Mehrkreis-Schutzventil, einem Druckregler, einer Versorgungsleitung zur Versorgung der Kreise des Mehrkreis-Schutzventils mit Druckluft, und einem Kompressor bekannt, der mittels einer pneumatischen Schaltvorrichtung schaltbar ist, wobei ein Vorsteuerventil vorgesehen ist, dass den Druckregler und die Schaltvorrichtung steuert, wobei zwischen dem Vorsteuerventil und der Schaltvorrichtung eine Drossel vorgesehen ist. Jeder Kreis weist einen Druckluftbehälter auf. Das Vorsteuerventil wird durch eine Steuer- und/oder Regelelektronik gesteuert und/oder geregelt. Drucksensoren überwachen den Druck in den Kreisen und in der Versorgungsleitung.

Bei Fahrzeugen mit Druckluftbremsanlage ist es zur Erfüllung der EU-Bremsenrichtlinie bekannt, für den Vorderachs- und den Hinterachsbremskreis gesonderte Druckluftbehälter vorzusehen. Für andere Druckluftverbraucher, wie beispielsweise einen Luftfederkreis, werden zusätzliche Druckluftbehälter eingesetzt, um sicherzustellen, dass die Funktionsfähigkeit der Bremsanlage nicht durch den Betrieb solcher weiteren Druckluftverbraucher negativ beeinflusst wird. Solche bekannten Druckluftanlagen mit gesonderten Druckluftbehältern für eine Vielzahl von Druckluftverbraucherkreisen sind mit großem Aufwand an hohen Kosten verbunden.

Die Aufgabe der vorliegenden Erfindung besteht darin, eine Druckluftanlage der eingangs genannten Art so auszubilden, dass weitestgehend auf Druckluftbehälter für weitere Druckluftverbraucherkreise, beispielsweise Luftfederkreise, - außer für die Bremskreise - verzichtet werden kann, ohne negative Rückwirkungen auf die Bremskreise befürchten zu müssen.

Diese Aufgabe wird durch die Erfindung gemäß Anspruch 1 gelöst.

Vorteilhafte und zweckmäßige Ausgestaltungen der erfindungsgemäßen Aufgabenlösung sind in den Unteransprüchen angegeben.

Die Erfindung sieht elektrisch betätigbare Ventile, vorzugsweise Magnetventile für die einzelnen Verbraucherkreise vor. Durch die erfindungsgemäß ausgebildete Druckluftanlage ergeben sich Kosteneinsparungen, weil auf die Druckluftbehälter für weitere Druckluftverbraucher, insbesondere für den Luftfederkreis einschließlich der zugehörigen Komponenten verzichtet werden kann. Auf die Behälter für die Betriebsbremskreise kann selbstverständlich nicht verzichtet werden. Durch die erfindungsgemäße Ausbildung können die Kosten für das Gesamtsystem reduziert werden. Der Installationsaufwand ist geringer. Bei Druckbedarf können die weiteren Druckluftverbraucher, insbesondere der Luftfederkreis primär durch die Betriebsbremskreise befüllt werden, solange die Bremsdrücke der Bremskreise den gesetzlichen Bestimmungen entsprechen, wozu es lediglich notwendig ist, das normalerweise geschlossenen Magnetventil des Luftfederkreises zu öffnen, da die Magnetventile der Betriebsbremskreise normal, d. h. im stromlosen Grundzustand, offen sind. Bei dem Druckluftfederkreis ohne Druckluftbehälter reduziert sich die Schalthäufigkeit des normal geschlossenen Magnetventils, da eine Betätigung nur bei einer Druckluftanforderung von dem elektronisch gesteuerten Luftfederkreis (ECAS) erfolgt. Die Systemsicherheit und Systemverfügbarkeit werden verbessert. Bei einem normalen Betrieb ergeben sich durch das geschlossene Magnetventil keine Rückwirkungen von dem Luftfederkreis auf die Bremskreise.

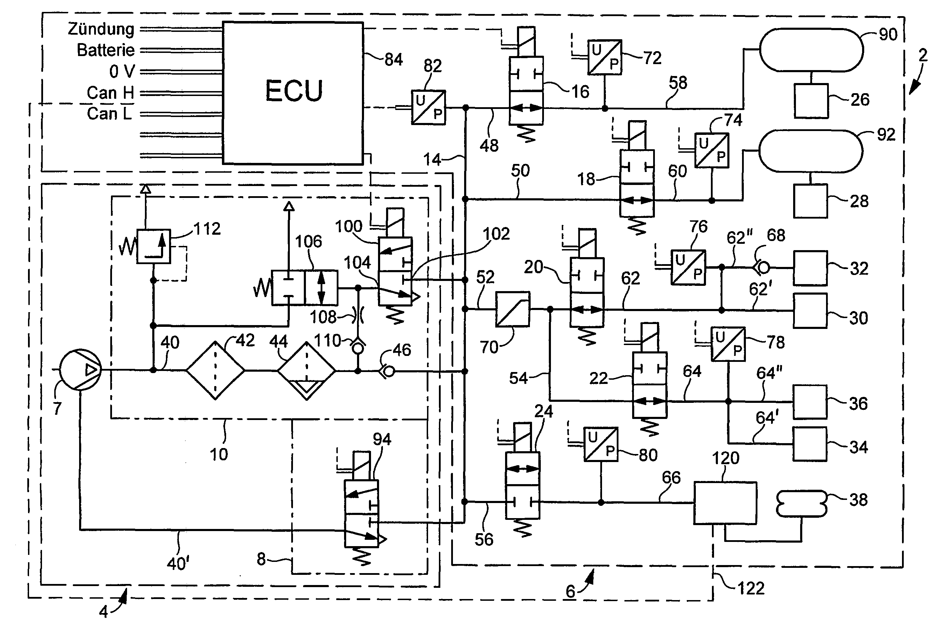

Die Erfindung soll nachfolgend anhand der beigefügten Zeichnung, die ein Ausführungsbeispiel einer erfindungsgemäßen Luftaufbereitungsanlage zeigt, näher erläutert werden.

Druckmittelleitungen sind in der Zeichnung durchgezogene Linien, elektrische Leitungen sind gestrichelte Linien.

Die Zeichnung zeigt eine Druckluftanlage 2 mit einem Druckluftversorgungsteil 4 und einem Druckluftverbraucherteil 6. Der Druckluftversorgungsteil 4 umfasst einen Kompressor 7, eine Kompressor - Steuereinrichtung 8 und ein Lufttrocknerteil 10.

Der Druckluftverbraucherteil 6 weist eine Druckluftverteilerleitung 14, mehrere elektrisch betätigbare Magnetventile 16, 18, 20, 22, 24 mit Rückstellfeder und mehrere über die Magnetventile mit Druckluft versorgte Druckluftverbraucherkreise 26, 28, 30, 32, 34, 36, 38 auf.

Vom Kompressor 7 führt eine Druckluftversorgungsleitung 40 über ein Filter 42, einen Lufttrockner 44 und ein Rückschlagventil 46 zur Verteilerleitung 14, von der zu den Magnetventilen führende Leitungen 48, 50, 52, 54, 56 abzweigen. Von den Magnetventilen führen Druckluftleitungen 58, 60, 62, 64, 66 zu den Verbraucherkreisen. Die Leitung 62 verzweigt sich in zu den Kreisen 30 und 32 führenden Leitungen 62', 62"; wobei in der Leitung 62" noch ein Rückschlagventil 68 angeordnet ist. In der Versorgungsleitung 52 ist ein Druckbegrenzer 70 angeordnet. Hinter dem Druckbegrenzer 70 zweigt die zum Magnetventil 22 führende Leitung 54 ab. Die Leitung 64 verzweigt sich in zu den Kreisen 34 und 36 führenden Leitungen 64' und 64".

Drucksensoren 72, 74, 76, 78, 80, 82 überwachen den Druck in den Verbraucherkreisen und in der Verteilerleitung 14 und geben den jeweiligen Druck als Drucksignal an eine elektronische Steuereinheit 84, die die Magnetventile direkt steuert.

Die Verbraucherkreise 26, 28 können beispielsweise Betriebsbremskreise, der Verbraucherkreis 30 kann ein Anhängerbremskreis, wobei normalerweise zwei Leitungen, eine Versorgungsleitung und eine Bremsleitung, zum Anhänger führen, der Verbraucherkreis 32 ein Feststellebremskreis mit Federspeicher, die Verbraucherkreise 34 und 36 können Nebenverbrauchskreise, wie Fahrerhausfederung, Türsteuerung etc., d.h. alles was nichts mit den Bremskreisen zu tun hat sein. Der Verbraucherkreis 38 ist ein Hochdruckkreis für eine Luftfederungsanlage (als Luftbalg dargestellt) ausgebildet. Eine Luftfederungsanlage benötigt normalerweise Hochdruck, weil die Luftfederbälge viel Volumen und relativ hohe Drücke aufweisen.

Die Betriebsbremskreise 26, 28 weisen Druckluftbehälter 90, 92 entsprechend den Richtlinien 98/12/ EG auf.

Die erfindungsgemäße Druckluftanlage ermöglicht, auf Druckluftbehälter in den Kreisen 30, 32, 34, 36 und insbesondere im Luftfederkreis 38 zu verzichten. Es ist z.B. zulässig, andere Druckluftverbraucherkreise aus den Betriebsbremskreisen (Kreise 26 und 28) zu versorgen, wenn die Bremsfunktion oder Bremswirkung der Betriebsbremskreise 26 und 28 nicht beeinträchtigt wird.

Der Kompressor 7 wird von der Kompressorsteuerung 8 mechanisch (pneumatisch) über eine Leitung 40' gesteuert. Die Kompressor - Steuerung 8 umfasst ein durch die elektronische Steuereinheit 84 schaltbares Magnetventil 94 mit kleiner Nennweite, das im stromlosen Grundzustand, wie dargestellt, entlüftet ist, wodurch der Kompressor 7 eingeschaltet ist. Wenn der Kompressor 7 ausgeschaltet werden soll, weil beispielsweise sämtliche Verbraucherkreise mit Druckluft aufgefüllt sind, schaltet die Steuereinheit 84 das Magnetventil 94 um, so dass der druckbetätigbare Kompressor über die Leitung 40' ausgeschaltet wird. Wird das Magnetventil 94, weil beispielsweise ein Verbraucherkreis Druckluft benötigt, stromlos geschaltet, wird das Magnetventil 94 wieder in den in der Zeichnung dargestellten Grundzustand geschaltet, wodurch die Leitung 40' entlüftet wird, so dass der Kompressor 7 eingeschaltet wird.

Der Lufttrocknerteil 10 umfasst ein Magnetventil 100 mit kleiner Nennweite, dessen Eingang 102 mit der Verteilerleitung 14 verbunden ist und über dessen Ausgang 104 ein Abschaltventil 106 pneumatisch geschaltet wird, das mit der Versorgungsleitung 40 des Kompressors 7 verbunden ist und zum Entlüften des Lufttrockners dient.

Wenn das Magnetventil 100 durchgeschaltet ist, fördert der Kompressor 7 nicht mehr in die Verbraucherkreise, sondern über das Ventil 106 ins Freie. Gleichzeitig strömt trockene Luft aus der Verteilerleitung 14 (aus den Behältern 90, 92 der Betriebsbremskreise) über das Magnetventil 100 über eine Drossel 108 und ein Rückschlagventil 110 durch den Lufttrockner 44 zur Regeneration seines Trockenmittels und weiter über den Filter 42 und das Ventil 106 ins Freie.

Das Bezugszeichen 112 bezeichnet ein Überdruckventil.

Die Magnetventile 16, 18, 20, 22, 24 werden von der Steuereinheit 84 gesteuert, wobei die Magnetventile 16 bis 22 der Verbraucherkreise 26 bis 34 im stromlosen Grundzustand offen sind, während das Magnetventil 24 des Luftfederkreises 38 im stromlosen Grundzustand geschlossen ist. Es können auch vorgesteuerte Magnetventile eingesetzt werden. Der Druck in den Kreisen wird unmittelbar an den Magnetventilen überwacht durch die Drucksensoren 72, 74, 76, 78, 80. Der Luftfederkreis 38 wird durch eine Steuereinrichtung 120 elektronisch gesteuert (auch als ECAS bekannt), die über eine Datenleitung 122 mit der elektronischen Steuereinheit 84 verbunden ist.

Sollte in einem Verbraucherkreis, beispielsweise im Kreis 30 (Anhängerbremskreis) der Druck absinken, erfolgt die Druckluftversorgung durch die Betriebsbremskreise über die offenen Magnetventile mit, wobei der Druck in den Nebenverbraucherkreisen 30 bis 36 durch den Druckbegrenzer 70 auf ein niedrigeres Niveau, beispielsweise 8,5 bar, als das Druckniveau, beispielsweise 10,5 bar, der Betriebsbremskreise 26 und 28 eingestellt wird. Der Luftfederkreis 38 ist durch das Magnetventil 24 abgesperrt und steht somit nicht mit den übrigen Kreisen in Verbindung. Er weist häufig ein höheres Druckniveau, beispielsweise 12,5 bar auf.

Wenn man auf den Behälter im Luftfederungskreis 38, wie oben beschrieben, verzichtet, was durch die spezielle beschriebene Anordnung und Ausbildung der Magnetventile ermöglicht wird, hat man nur die Behältervolumina der Betriebsbremskreise und ein kleines Totvolumen bis zu den Verbraucherkreisen. Wenn bei einem Luftfederkreis ohne Druckluftbehälter eine kleine Leckage auftritt, müsste normalerweise über das Magnetventil 24 häufig geregelt werden. Der entsprechende Regelalgorithmus ist wegen der großen Nennweite des Magnetventils 24 sehr kompliziert, so dass man das Magnetventil nur dann öffnen möchte, wenn der Luftfederkreis wirklich Druckluft benötigt. Dann kann auf die oben beschriebene Regelung des Druckes verzichtet werden.

Die über die Datenleitung 122 mit der elektronischen Steuereinheit 84 verbundene Steuereinrichtung 120 schickt bei Druckluftbedarf, beispielsweise infolge einer Niveauregelungsfunktion, ein Druckluft-Anforderungssignal über die Datenleitung an die elektronische Steuereinheit 84. Diese prüft, ob die Drücke (bzw. Luftmenge, Luftmasse oder Energie) in den Bremskreisen 26 und 28 den vorgeschriebenen Sollwerten entsprechen. Ist dies der Fall, schaltet die Steuereinheit 84 das Magnetventil 24 aus der geschlossenen Grundstellung in die offene Stellung, wodurch eine Verbindung über die normal offenen Magnetventile 16, 18 mit den Behältern 90, 92 der Betriebsbremskreise hergestellt wird. Der Luftfederungskreis 38 wird dann aus den Druckluftbehältern 90, 92 der Bremskreise 26, 28 über deren offene Magnetventile 16, 18 befüllt. Sinkt der durch die Drucksensoren 72, 74 gemessene Druck in den Bremskreisen unter den vorgeschriebenen Wert, wird dies von der elektronischen Steuereinheit 84 erkannt, die daraufhin das Magnetventil 24 des Luftfederkreises 38 schließt und den Kompressor 7 über die Kompressor-Steuereinrichtung 8 durch Umschaltung des Magnetventils 94 einschaltet. Der Kompressor fördert in die Bremskreise. Wenn der Solldruck in den Bremskreisen wieder erreicht ist, schaltet die elektronische Steuereinheit 84 das Magnetventil 24 des Luftfederkreises 38 wieder in die Offenstellung, so dass der Luftfederkreis weiter durch die Bremskreise bzw. deren Druckluftbehälter 90, 92 aufgefüllt wird. Dieses zyklische Auffüllen durch die Bremskreise wird solange fortgesetzt, bis der Solldruck im Luftfederkreis 38 erreicht ist. Das Druckluftanforderungssignal fällt ab und das Magnetventil 24 wird wieder geschlossen und die Bremskreise werden wieder aufgefüllt. Danach wird das Magnetventil 94 zur Ausschaltung des Kompressors 7 wieder in den belüfteten Grundzustand geschaltet zur Belüftung der Leitung 40'.

Der Kompressor fördert normalerweise nur in die Bremskreise 26, 28. Er kann auch - falls erforderlich - in den Luftfederkreis fördern, wobei dann in Abhängigkeit vom Luftdruck in de Bremskreisen die Magnetventile 16, 18 der Bremskreise geschlossen werden können. Die Magnetventile 20 und 22 der Nebenverbraucherkreise bleiben offen, da der Druck in den zugeordneten Verbraucherkreisen 30-36 durch den Druckbegrenzer 70 begrenzt wird.

Der Luftfederkreis 38 hat, wie oben schon erwähnt, in der Regel ein höheres Druckniveau als die anderen Kreise; er braucht aber relativ selten Druck und ist daher erfindungsgemäß stromlos geschlossen. Er benötigt auch nicht innerhalb sehr kurzer Zeit (msec oder Bruchteilen von Sekunden): bei Bedarf seine Druckluft, so dass man eine gewisse Totzeit in Kauf nehmen kann für die Kommunikation mit der elektronischen Steuereinheit 84 ; der Luftfederkreis ist daher normal geschlossen. Die Kreise 30 bis 36 werden aus den Behältern 90 und 92 der Betriebsbremskreise 26 und 28 versorgt ,so dass während der normalen Fahrt deren Ventile 16, 18, 20, und 22 stromlos offen sind.

Anstelle des Druckes können auch andere Zustandsgrößen, wie Luftmenge, Luftmasse und Energie in den Verbraucherkreisen und der Verteilerleitung überwacht werden.

## Patentansprüche

1. Elektronische Druckluftanlage für Fahrzeuge mit einem einen Kompressor aufweisenden Druckluftversorgungsteil und einem Druckluftverbraucherteil mit mehreren Druckluftfverbraucherkreisen und Druckluftbehälter aufweisenden Betriebsbremskreisen, die über elektrisch betätigbare Ventile mit Druckluft versorgt werden, wobei der Druck zumindest in den Betriebsbremskreisen durch Sensoren überwacht wird, deren elektrische Signale von einer elektronischen Steuereinheit ausgewertet werden, die die elektrisch betätigbaren Ventile steuert, **dadurch gekennzeichnet, dass** das elektrisch betätigbare Ventil (24) des Druckluftverbraucherkreises (38), der ohne Druckluftbehälter ausgebildet ist, im stromlosen Grundzustand geschlossen ist und bei Druckluftbedarf des Druckluftverbraucherkreises (38) durch die elektronische Steuereinheit (84) in die Offenstellung schaltbar ist zur Herstellung einer Verbindung mit den Betriebsbremskreisen (26, 28) bzw. mit deren Druckluftbehältern (90, 92) und/oder dem Druckluftversorgungsteil (4).

2. Druckluftanlage nach Anspruch 1, **dadurch gekennzeichnet, dass** der Druckluftverbraucherkreis (38) ein Luftfederkreis ist.

3. Druckluftanlage nach Anspruch 1, **dadurch gekennzeichnet, dass** die Steuereinheit (84) das elektrisch betätigbare Ventil (24) des Druckluftverbraucherkreises (38) schließt, wenn eine Zustandsgröße (Druck, Luftmenge, Luftmasse, Energie) in den Bremskreisen (26, 28) unter einen vorgeschriebenen Wert fällt, den Kompressor (7) zum Wiederauffüllen der Bremskreise einschaltet und das elektrisch betätigbare Ventil (24) wieder öffnet, wenn der Sollwert der Zustandsgröße in den Bremskreisen wieder erreicht ist, wobei dieser Vorgang so lange wiederholt wird, bis der Druckluftverbraucherkreis (38) wieder befüllt und der vorgeschriebene Sollwert der Zustandsgröße in den Bremskreisen eingestellt ist, und dass danach das Magnetventil (24) wieder in den geschlossenen Grundzustand geschaltet und der Kompressor wieder ausgeschaltet wird.

4. Druckluftanlage nach einem der vorhergehenden Ansprüche, **dadurch gekennzeichnet, dass** die elektrisch betätigbaren Ventile (16, 18, 20, 22, 24) Magnetventile sind.

5. Druckluftanlage nach Anspruch 1 oder 3, **dadurch gekennzeichnet, dass** der Druckluftverbraucherkreis (38) durch eine elektronische Steuereinrichtung (120) gesteuert wird, die über eine Datenleitung (122) mit der elektronischen Steuereinheit (84) kommuniziert.

6. Druckluftanlage nach Anspruch 5, **dadurch gekennzeichnet, dass** ein Druckluftbedarf über die Datenleitung (122) der Steuereinrichtung (120) mitgeteilt wird.

7. Druckluftanlage nach Anspruch 1, **dadurch gekennzeichnet, dass** die Druckluftverbraucherkreise wenigstens einen ohne Druckluftbehälter ausgebildeten Nebenverbraucherkreis (30, 32, 34, 36) aufweisen.

8. Druckluftanlage nach Anspruch 7, **dadurch gekennzeichnet, dass** das Druckniveau in den Nebenverbraucherkreisen (30, 32, 34, 36) kleiner ist als das Druckniveau in den Betriebsbremskreisen (26, 28).

9. Druckluftanlage nach einem der Ansprüche 1, 2, 7 und 8, **dadurch gekennzeichnet, dass** das Druckniveau im Druckluftverbraucherkreis (38) größer ist als das Druckniveau in den Betriebsbremskreisen (26, 28) und den Nebenverbraucherkreisen (30-36).

10. Druckluftanlage nach einem der Ansprüche 7 bis 9, **dadurch gekennzeichnet, dass** den Magnetventilen (20, 22) der Nebenverbraucherkreise (30, 32, 34, 36) ein Druckbegrenzungsventil (70) vorgeschaltet ist.

11. Druckluftanlage nach einem der vorhergehenden Ansprüche, **dadurch gekennzeichnet, dass** das Magnetventil (24) des Luftfederkreises (38) und die Magnetventile (16, 18, 20, 22) der weiteren Druckluftverbraucherkreise (26-36) an eine gemeinsame Druckluftverteilerleitung (14) angeschlossen sind, an die eine mit dem Kompressor (7) verbundene Druckluftversorgungsleitung (40) angeschlossen ist.

12. Druckluftanlage nach Anspruch 11, **dadurch gekennzeichnet, dass** in der Druckluftversorgungsleitung (40) ein Lufttrockner (44) und ein Rückschlagventil (46) angeordnet sind.

## Claims

1. Electronic compressed air system for vehicles, comprising a compressed air supply part that has a compressor and comprising a compressed air utilisation part having a plurality of compressed air utilisation circuits and compressed-air-reservoir-comprising service brake circuits, which circuits are supplied with compressed air by way of electrically actuatable valves, the pressure - at least in the service brake circuits - being monitored by sensors, the electrical signals of which sensors are evaluated by an electronic control unit which controls the electrically actuatable valves, **characterised in that** the electrically actuatable valve (24) of the compressed air utilisation circuit (38), which does not have a compressed air reservoir, is closed in the de-energised, basic state and is arranged to be switched into the open position by the electronic control unit (84) when the compressed air utilisation circuit (38) has a compressed air requirement to establish a connection with the service brake circuits (26, 28) or with their compressed air reservoirs (90, 92) and/or with the compressed air supply part (4).

2. Compressed air system according to claim 1, **characterised in that** the compressed air utilisation circuit (38) is an air suspension circuit.

3. Compressed air system according to claim 1, **characterised in that** the control unit (84) closes the electrically actuatable valve (24) of the compressed air utilisation circuit (38) when a state variable (pressure, amount of air, mass of air, energy) in the brake circuits (26, 28) drops below a predetermined value, it switches on the compressor (7) so as to replenish the brake circuits and it re-opens the electrically actuatable valve (24) when the desired value of the state variable in the brake circuits has been reached again, that procedure being repeated until such time that the compressed air utilisation circuit (38) has been replenished and the predetermined desired value of the state variable has been established in the brake circuits; and **in that** afterwards the solenoid valve (24) is switched back into the closed, basic state and the compressor is switched off again.

4. Compressed air system according to one of the preceding claims, **characterised in that** the electrically actuatable valves (16, 18, 20, 22, 24) are solenoid valves.

5. Compressed air system according to claim 1 or 3, **characterised in that** the compressed air utilisation circuit (38) is controlled by an electronic control device (120) which communicates with the electronic control unit (84) by way of a data line (122).

6. Compressed air system according to claim 5, **characterised in that** a compressed air requirement is reported to the control device (120) by way of the data line (122).

7. Compressed air system according to claim 1, **characterised in that** the compressed air utilisation circuits include at least one auxiliary utilisation circuit (30, 32, 34, 36) which does not have a compressed air reservoir.

8. Compressed air system according to claim 7, **characterised in that** the pressure level in the auxiliary utilisation circuits (30, 32, 34, 36) is lower than the pressure level in the service brake circuits (26, 28).

9. Compressed air system according to one of claims 1, 2, 7 and 8, **characterised in that** the pressure level in the compressed air utilisation circuit (38) is higher than the pressure level in the service brake circuits (26, 28) and the auxiliary utilisation circuits (30-36).

10. Compressed air system according to one of claims 7 to 9, **characterised in that** a pressure limitation valve (70) is arranged upstream of the solenoid valves (20, 22) of the auxiliary utilisation circuits (30, 32, 34, 36).

11. Compressed air system according to one of the preceding claims, **characterised in that** the solenoid valve (24) of the air suspension circuit (38) and the solenoid valves (16, 18, 20, 22) of the further compressed air utilisation circuits (26-36) are connected to a common compressed air distributor line (14) to which there is connected a compressed air supply line (40) connected to the compressor (7).

12. Compressed air system according to claim 11, **characterised in that** an air dryer (44) and a non-return valve (46) are arranged in the compressed air supply line (40).

## Revendications

1. Dispositif électronique à air comprimé pour véhicules comportant une partie d'alimentation en air comprimé présentant un compresseur et une partie de consommation d'air comprimé comportant plusieurs circuits de freinage de service présentant des circuits consommateurs d'air comprimé et des réservoirs d'air comprimé, qui sont alimentés en air comprimé par l'intermédiaire de soupapes pouvant être commandées électriquement, dans lequel la pression est surveillée, au moins dans les circuits de freinage de service, par des capteurs, dont les signaux électriques sont évalués par une unité de commande électronique, qui commande les soupapes pouvant être commandées électriquement, **caractérisé en ce que** la soupape pouvant être commandée électriquement (24) du circuit consommateur d'air comprimé (38), qui est réalisé sans réservoirs d'air comprimé, est fermée dans l'état fondamental sans courant et peut être commutée dans la position d'ouverture par l'unité de commande électronique (84) en cas de besoin en air comprimé du circuit consommateur d'air comprimé (38) en vue de l'établissement d'une liaison avec les circuits de freinage de service (26, 28) ou leurs réservoirs d'air comprimé (90, 92) et/ou la partie d'alimentation en air comprimé (4).

2. Dispositif à air comprimé selon la revendication 1, **caractérisé en ce que** le circuit consommateurs d'air comprimé (38) est un circuit pneumatique.

3. Dispositif à air comprimé selon la revendication 1, **caractérisé en ce que** l'unité de commande (84) ferme la soupape pouvant être commandée électriquement (24) du circuit consommateur d'air comprimé (38), lorsqu'un paramètre d'état (pression, volume d'air, masse d'air, énergie) dans les circuits de freinage (26, 28) tombe en dessous d'une valeur prédéterminée, met en service le compresseur (7) pour remplir les circuits de freinage et ouvre de nouveau la soupape pouvant être commandée électriquement (24), lorsque la valeur de consigne du paramètre d'état dans les circuits de freinage est de nouveau atteinte, dans lequel ce processus est répété jusqu'à ce que le circuit consommateur d'air comprimé (38) soit de nouveau rempli et que la valeur de consigne prédéterminée du paramètre d'état soit ajustée dans les circuits de freinage, et **en ce que**, ensuite, l'électrovanne (24) soit commutée de nouveau dans l'état fondamental fermé et le compresseur soit de nouveau coupé.

4. Dispositif à air comprimé selon l'une des revendications précédentes, **caractérisé en ce que** les soupapes pouvant être commandées électriquement (16, 18, 20, 22, 24) sont des électrovannes.

5. Dispositif à air comprimé selon la revendication 1 ou 3, **caractérisé en ce que** le circuit consommateur d'air comprimé (38) est commandé par un dispositif de commande électronique (120), qui communique avec l'unité de commande électronique (84) par une ligne de données (122).

6. Dispositif à air comprimé selon la revendication 5, **caractérisé en ce qu'**un besoin en air comprimé est communiqué au dispositif de commande (120) par l'intermédiaire de la ligne de données (122).

7. Dispositif à air comprimé selon la revendication 1, **caractérisé en ce que** les circuits consommateurs d'air comprimé présentent au moins un circuit consommateur secondaire (30, 32, 34, 36) réalisé sans réservoirs d'air comprimé.

8. Dispositif à air comprimé selon la revendication 7, **caractérisé en ce que** le niveau de pression dans les circuits consommateurs secondaires (30, 32, 34, 36) est inférieur au niveau de pression dans les circuits de freinage de service (26, 28).

9. Dispositif à air comprimé selon l'une des revendications 1, 2, 7 et 8, **caractérisé en ce que** le niveau de pression dans le circuit consommateur d'air comprimé (38) est supérieur au niveau de pression dans les circuits de freinage de service (26, 28) et les circuits consommateurs secondaires (30-36).

10. Dispositif à air comprimé selon l'une des revendications 7 à 9, **caractérisé en ce qu'**une soupape de limitation de pression (70) est placée en amont des électrovannes (20, 22) des circuits consommateurs secondaires (30, 32, 34, 36).

11. Dispositif à air comprimé selon l'une des revendications précédentes, **caractérisé en ce que** l'électrovanne (24) du circuit pneumatique (38) et les électrovannes (16, 18, 20, 22) des autres circuits consommateurs d'air comprimé (26-36) sont reliées à une conduite de distribution commune (14) à laquelle est reliée une conduite d'alimentation en air comprimé (40) reliée au compresseur (7).

12. Dispositif à air comprimé selon la revendication 11, **caractérisé en ce qu'**un dessiccateur d'air (44) et un clapet anti-retour (46) sont disposés dans la conduite d'alimentation en air comprimé (40).
